# EUROPEAN PATENT APPLICATION

(11) **EP 1 525 791 A1**
(43) Date of publication of application: **27.04.2005**
(21) Application number: 04256385.8
(22) Date of filing: 16.10.2004
(51) Int. Cl.: A01K 83/00

(54) **Fishing hook**

(30) Priority: 22.10.2003 GB 0324570
(71) Applicant: Haynes, Graham Brian, Ross-On-Wye, Herefordshire HR9 5NB (GB)
(72) Inventor: Haynes, Graham Brian, Ross-On-Wye, Herefordshire HR9 5NB (GB)
(74) Representative: Higgins, Michael Roger

(57) **Abstract**

A fishing hook 10 has an irregular pattern 18 over at least part of its exterior surface to disrupt the regular outline of the hook 10. Preferably, the irregular pattern 18 is a camouflage pattern.

## Description

This invention relates to a fishing hook.

Fishing hooks have traditionally been monochrome plated or coated. However, this provides an outline which can be easily recognised.

The present invention seeks to provide a solution to this problem.

According to a first aspect of the present invention, there is provided a fishing hook having an irregular pattern over at least part of its exterior surface to disrupt the regular outline of the hook.

Preferable and/or optional features of the first aspect of the invention are set forth in claims 2 to 9, inclusive.

According to a second aspect of the invention, there is provided a fishing device having a fishing hook comprising an irregular pattern over at least part of its exterior surface to disrupt the regular outline of the hook.

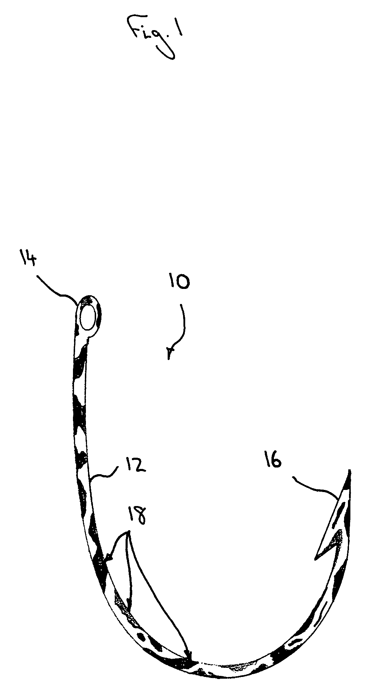

The invention will now be more particularly described, by way of example only, with reference to the accompanying drawing, which is a diagrammatic side elevational view of a fishing hook, in accordance with the first aspect of the present invention.

Referring to the drawing, there is shown a fishing hook 10 which is formed and shaped in a traditional well-known manner. The fishing hook 10 comprises an elongate hook-shaped body 12, an eyelet 14 formed at one end of the body 12 for attachment to a fishing line or wire (not shown), and a barb 16 formed at the other end.

An irregular pattern 18 is applied to the exterior surface of the fishing hook 10. The pattern 18 is applied as a plating which covers the entire body 12 of the hook 10. However, the pattern 18 can be applied using any suitable coating process. For example, the fishing hook 10 can be monochrome plated in a common well-known manner, and can then be coated with the irregular pattern 18. Alternatively, the irregular pattern 18 can be incorporated as part of the plating, thus reducing the number of steps required to produce the hook 10.

The irregular pattern 18 is a camouflage pattern 18 which is intended to breakup or disrupt the uniform regular outline of the fishing hook 10. This makes it difficult for fish or other prey to distinguish and recognise the hook 10, and to give a more natural presentation to any bait being used on the hook 10.

It is preferred that the parts forming the irregular pattern 18 do not repeat. However, the use of two like parts to form the irregular pattern 18 repetition is possible if the repeat usage is not immediately noticeable. For example, the pattern 18 may include two like parts which are differently oriented relative to each other. Ideally, the pattern 18 should be entirely random.

The irregular pattern 18 includes more than one colour or more than one tone of colour. For example, a user, may find certain situations suit a single colour hook 10 having multiple tones, such as for reproducing a 'dappled' effect.

In one specific case, it is envisaged that the irregular pattern 18 can mimic or be a reproduction of a certain type of bait. For example, the pattern 18 applied to the hook 10 could provide the impression of maggot skin or worm skin.

It is also envisaged that the irregular pattern 18 could mimic the environment in which the hook 10 is to be used. For example, when reed beds are in the vicinity, a hook 10 having an irregular pattern 18 incorporating, or creating the impression of, one or more reed stems can be used. Similarly for fishing areas having algae deposits, a fishing hook 10 having an irregular pattern 18 incorporating an image, or creating the impression, of algae can be used. Obviously, many other fishing environments are known, and features of those environments could similarly be introduced into the irregular pattern 18 of the hook 10 to aid in the rapid assimilation of the hook 10 into the habitat of the fish or other prey.

It is also considered that the irregular pattern 18 be adapted based on weather conditions in which the hook 10 is intended to be used. Clear sunny conditions are likely to lighten the water in the fishing area and increase reflection. These conditions call for an irregular pattern 18 having lighter colours or tones. In the case of overcast conditions, the irregular pattern 18 has darker colours or tones.

Similar considerations are also to be paid when windy conditions are apparent, resulting in turbulence in the water of the fishing area, or if rain occurs. In both cases, the irregular pattern 18 is adapted to best camouflage the hook 10 when submersed.

It is expected that the user will, prior to arriving at the fishing site, consult the weather forecast to ascertain the likely weather conditions for the period of expected fishing. The user will then choose the fishing hooks 10 having the appropriate irregular pattern 18, or a selection of the fishing hooks 10, accordingly. If the user is also familiar with the locality of the fishing area, such as general plant life and water conditions, then it is expected that this will also be considered when choosing which irregular pattern fishing hooks 10 are to be used.

As an alternative, the body of the fishing hook can be formed from two different materials, typically being two different metals, which, when combined, produce the irregular exterior surface pattern. This dispenses with the need for plating or coating.

It will also be understood that common variants in shape and design of the fishing hook are also intended. For example, the eyelet 14 could be replaced by a spade end, and the barb could be dispensed with altogether, or could be replaced by multiple barbs.

Although it is intended that the above-described fishing hooks are to be used with a fishing rod, the fishing hooks can be used with any fishing device requiring a hook.

It is thus possible to provide a camouflaged fishing hook. It is also possible to provide a fishing hook which can be more quickly assimilated into a fish habitat.

The embodiments described above are given by way of example only, and other modifications will be apparent to persons skilled in the art without departing from the scope of the invention as defined by the appended claims. For example, only part of the body of the hook need have the irregular pattern.

## Claims

1. A fishing hook having an irregular pattern (18) over at least part of its exterior surface to disrupt the regular outline of the hook (10).

2. A fishing hook as claimed in claim 1, wherein the irregular pattern (18) is a camouflage pattern.

3. A fishing hook as claimed in claim 1 or claim 2, wherein the irregular pattern (18) includes more than one colour or tone of colour.

4. A fishing hook as claimed in any one of claims 1 to 3, wherein the irregular pattern (18) comprises no repetition.

5. A fishing hook as claimed in any one of the preceding claims, wherein the pattern (18) is applied as part of a coating process.

6. A fishing hook as claimed in claim 5, wherein the coating process is a plating process and the pattern (18) is applied as a plating.

7. A fishing hook as claimed in any one of the preceding claims, wherein the pattern (18) mimics or is a reproduction of a specific type of bait.

8. A fishing hook as claimed in any one of claim 1 to 6, wherein the pattern (18) is specific to an environment in which the hook (10) is intended to be used.

9. A fishing hook as claimed in any one of the preceding claims, wherein the pattern (18) is specific to weather at a location at which the hook is intended to be used.

10. A fishing device having a fishing hook (10) comprising an irregular pattern (18) over at least part of its exterior surface to disrupt the regular outline of the hook (10).
